# EUROPEAN PATENT APPLICATION

(11) **EP 4 622 057 A1**
(43) Date of publication of application: **24.09.2025**
(21) Application number: 25164303.7
(22) Date of filing: 18.03.2025
(51) Int. Cl.: H02J 13/00

(54) **PROCESSING SYSTEM AND METHOD FOR AN ELECTRIC POWER SYSTEM, AND MACHINE-READABLE INSTRUCTION CODE**

(30) Priority: 20.03.2024 EP 24386031
(71) Applicant: Hitachi Energy Ltd, 8050 Zürich (CH)
(72) Inventor: Bjornor, Erik, 77133 Ludvika (SE); Marino, David Giovanni, Montreal, H2R 2P1 (CA); Dalle Ave, Giancarlo, Toronto, M9P1J5 (CA); Hilliard, Antony Foster, Montreal, H2E1W4 (CA); Chakravorty, Jhelum, Montreal, H3G1Y2 (CA); Schmitt, Susanne, 69115 Heidelberg (DE); Hafiz, Faeza, Apex, 27502 (US); Mitrentsis, Georgios, 70372 Stuttgart (DE)
(74) Representative: Meier, Florian

(57) **Abstract**

To process monitoring data (68) during operation of an electric power system, a processing system (60) controls a human machine interface (62) to output an alarm list, enable an operator input to select a list element from the alarm list, and, responsive to the operator input, enlarge the list element and concurrently shift one or several other list elements of the alarm list to preserve an order of the alarm list.

## Description

### TECHNICAL FIELD

Embodiments of the invention relate to processing systems and methods for electric power system control and/or electric power system monitoring. Embodiments of the invention relate in particular to processing systems and methods operative to provide alarms responsive to monitoring data obtained for the electric power system.

### BACKGROUND

Power system operators deal with a large number of alarms generated by the corresponding network monitoring and control components. Alarms for transmission and distribution systems are useful to allow different situations in power grids to be detected and to take appropriate action to prevent, correct, and/or control undesired power grid states. An inefficient alarm system can make efficient alarm handling more challenging. A lack of efficient alarm handling can lead to a situation that might jeopardize the normal operation of the various grid components or even the stability of the power grid. Hence, enhanced techniques of alarm processing are of importance for ensuring the reliable power grid operation.

EP 4 149 075 A1 and US 2015/0268684 A1 disclose systems or methods useful in association with alarms.

There is still a need for improved techniques that allow suitable actions to be taken in association with electric power system control and/or management responsive to alarms.

### SUMMARY

It is an object of the invention to provide methods and/or processing systems that provide enhanced techniques of providing alarms based on monitoring data obtained from an electric power system, in particular an electric power grid. There is in particular a need for such methods and/or processing systems that mitigate the risk of inadequate response to an alarm situation when alarms are provided in an alarm list.

According to exemplary embodiments, a processing system, a method, and machine-readable instruction code as recited in the independent claims are provided. The dependent claims define preferred or advantageous embodiments.

According to an aspect of the invention, there is provided a processing system for electric power system control and/or electric power system monitoring. The processing system comprises at least one interface operative to receive monitoring data during operation of the electric power system. The processing system comprises at least one processing circuit operative to process the monitoring data and to control a human machine interface (HMI) to: output an alarm list comprising several list elements arranged sequentially along a direction on the HMI, each of the several list element providing information on at least one alarm of a plurality of alarms generated based on the monitoring data; enable an operator input to select a list element from the several list elements; and responsive to the operator input, enlarge the list element from a first size to a second size on the HMI to output additional information in relation to one or several alarms for which the list element provides the information, and concurrently shift one or several other list elements of the alarm list along the direction on the HMI to preserve an order of the several list elements on the HMI.

Various effects and advantages are attained by the processing system. The processing system is operative to enable the operator input to provide additional information on one or several alarms, and to attain this while maintaining the context within the alarm list. The processing system is operative to, responsive to the operator input, integrate the additional information into the alarm list output via the HMI while maintaining the order of the several list elements and, thus, the context. The risk of incorrect handling of a situation that causes an alarm in the electric power system (e.g., in a transmission grid and/or distribution grid) is thereby mitigated. The processing system contributes to safety and reliability of power grid operation. The integration of the additional information into the alarm list also obviates the need for the operator to potentially switch between different screens (one for the alarm list, another one for the additional information), facilitating handling of a situation in which electric power system that has given rise to the alarm.

The at least one processing circuit may be operative to identify, based on the monitoring data, an alarm flood comprising several identical alarms that are successively raised, wherein the several list elements comprise an alarm flood list element providing information on the several identical alarms of the alarm flood.

Thereby, the processing system assists an operator in handling complex situations giving rise to several consecutive identical alarms.

The at least one processing circuit may be operative to control the HMI such that the alarm flood list element comprises a single line annunciation of a number of the several identical alarms that are successively raised in the alarm flood while the list element has the first size on the HMI.

Thereby, the processing system is operative to control the HMI responsive to the alarm flood and to facilitate an appropriate control action in response to the alarm flood.

The at least one processing circuit may be operative to control the HMI such that the alarm flood list element comprises an indicator for a number of the several identical alarms that are successively raised in the alarm flood while the list element has the first size on the HMI.

Thereby, the processing system facilitates the handling of an alarm flood in which an identical alarm is raised repeatedly in a consecutive manner (i.e., with no other alarms intervening). The processing system is operative to control the HMI responsive to the alarm flood and to facilitate an appropriate control action in response to the alarm flood.

The at least one processing circuit may be operative to control the HMI such that the indicator comprises a numerical indicator quantifying the number of the several identical alarms that are successively raised in the alarm flood.

Thereby, the processing system facilitates the handling of the alarm flood. The numerical indicator provides quantitative information on the number of consecutive alarms, facilitating an appropriate control action in response to the alarm flood.

The at least one processing circuit may be operative to control the HMI, responsive to the operator input selecting the alarm flood list element, to enlarge the alarm flood list element to the second size to output the additional information on the several identical alarms in the alarm flood.

Thereby, the processing system is operative to, responsive to the operator input, integrate the additional information on the several identical alarms into the alarm list output via the HMI while maintaining the order of the several list elements and, thus, the context. The integration of the additional information on the several identical alarms in the alarm flood into the alarm list obviates the need for the operator to switch between different screens (one for the alarm list, another one for the additional information), facilitating handling of a situation in which electric power system that has given rise to the alarm flood.

The at least one processing circuit may be operative to control the HMI to enlarge the list element from the first size to the second size along the direction while maintaining a transverse size of the list element in a transverse direction perpendicular to the direction unchanged.

Thereby, the processing system is operative to, responsive to the operator input, integrate the additional information into the alarm list in a manner that preserves the context within the alarm list.

The at least one processing circuit may be operative to control the HMI to enable a further operator input while the list element has the second size on the HMI; and cause a control action to be performed responsive to the further operator input to address an alarm-triggering situation in the electric power system giving rise to the at least one alarm for which the list element provides information.

Thereby, the processing system is operative to cause the control action to be performed selectively dependent on the additional information being or having been output via the HMI, in the context of other alarms adjacent the selected list element in the alarm list. The risk of an inadequate action being taken is thereby mitigated. This contributes to safe and reliable electric power system operation, e.g., to safe and reliable electric power system operation (e.g., power grid operation).

The processing system may be operative such that the control action comprises an action affecting primary system equipment of the electric power system and/or secondary system equipment of the electric power system, the action being a corrective action or a mitigating action.

Thereby, the processing system is operative to cause the control action to mitigate or correct the situation that has given rise to the alarm, and to do so selectively dependent on the additional information being or having been output via the HMI, in the context of other alarms adjacent the selected list element in the alarm list. The risk of an inadequate action being taken is thereby mitigated. This contributes to safe and reliable electric power system operation, e.g., to safe and reliable electric power system operation (e.g., power grid operation).

The processing system may be operative to automatically cause the control action to be performed responsive to the further operator input.

Thereby, the processing system contributes to a prompt resolution of the situation triggering the alarm. This contributes to safe and reliable electric power system operation, e.g., to safe and reliable electric power system operation (e.g., power grid operation).

The control action may comprise any one or several of the following control actions related to an alarm of the alarm list: delegating the alarm (e.g., to a different system operator); marking the alarm; acknowledging the alarm; searching for past occurrences, past resolutions, and/or documentation about the alarm; navigating to a geographic or technical point of origin of the alarm (e.g., navigating in at least one monitoring or control tool to the geographic or technical point of origin of the alarm); initiating a communication link (e.g., with an operator in charge of primary system equipment that is a root-cause of the situation triggering the alarm); initiating a maintenance ticket (e.g., with a grid operator or with an operator of the primary system equipment that is a root-cause of the situation triggering the alarm).

Thereby, control actions relating to the processing of the alarm in the processing system and/or control actions relating to tasks for resolving the situation triggering the alarm may be caused to be performed (e.g., automatically or semi-automatically) by the processing system. In particular, a communication link that is useful for establishing data and/or voice communication to an operator responsible for the primary system equipment that is a root-cause of the situation triggering the alarm can be established automatically or semi-automatically, contributing to a swift resolution of the situation triggering the alarm.

The at least one processing circuit may be operative to control the HMI to prevent the further operator input prior to the list element being enlarged to the second size.

Thereby, the processing system ensures that the control action can be triggered, via the processing system, conditionally dependent on the additional information having been output via the HMI in the context of the alarm list.

The at least one processing circuit may be operative to determine an alarm severity for the one or several alarms for which the list element provides information; and responsive to a verification that the alarm severity fulfils a severity flag criterion, control the HMI to output a severity flag while the list element is enlarged to the second size.

Thereby, the processing system can flag alarms that are severe (e.g., alarms that require immediate action to be taken), facilitating handling of the alarms in the alarm list.

The at least one processing circuit may be operative to control the HMI to shift the one or several other list elements of the alarm list such that the list element enlarged to the second size is arranged adjacent the one or several other list elements in a non-overlapping manner.

Thereby, the processing system ensures that the additional information is output via the HMI in the context of the alarm list. This facilitates the handling of the alarm list, contributing to safe and reliable operation of the electric power system (e.g., of the electric grid).

The at least one processing circuit may be operative to control the HMI such that the additional information is determined from the monitoring data in a manner that is dependent on an alarm type of the at least one alarm for which the list element provides the information.

Thereby, the processing system provides the type of additional information that is of particular relevance to the at least one alarm associated with the list element selected by the operator input. This facilitates the handling of the alarm list, contributing to safe and reliable operation of the electric power system (e.g., of the electric grid).

The at least one processing circuit may be operative to determine, based on the monitoring data, a time horizon related to an alarm time with which the list element is associated (i.e., the alarm time of the one alarm on which the list element provides information, or the most recent alarm time of several alarms on which the list element provides information). The at least one processing circuit may be operative to control the HMI such that the additional information may comprise one, several, or all of the following: a graph representing an electric characteristic of the electric power system as a function of time over the time horizon; an event history of electric power system events as a function of time over the time horizon; an additional list of similar alarms triggered over the time horizon.

Thereby, the processing system provides the type of additional information that is of particular relevance to understanding the alarm(s) for which the list element provides information, in the context of the alarm list. This facilitates the handling of the alarm list, contributing to safe and reliable operation of the electric power system (e.g., of the electric grid).

The at least one processing circuit may be operative to control the HMI such that the additional information may comprise one, several, or all of the following: a line graph; a bar chart; a numerical value; a series of numerical values; a meter; a list; a textual description; an icon; an icon sequence.

Thereby, the processing system is operative to provide the additional information in a manner that facilitates the initiation of a suitable corrective or mitigating action, while maintaining the context provided by the alarm list. This facilitates the handling of the alarm list, contributing to safe and reliable operation of the electric power system (e.g., of the electric grid).

The processing system may be operative such that each of the several list elements has an alarm time associated therewith, the several list elements being time-ordered based on the alarm time, wherein the at least one processing circuit is operative to maintain the alarm time-based ordering when enlarging the list element to the second size.

Thereby, the processing system is operative to provide the additional information in a chronological context of other alarms.

The at least one processing circuit may be operative to generate the alarms based on the monitoring data.

Thereby, the processing system operates not only as an alarm generator, but also controls the HMI to enable additional information on an alarm to be output via the HMI in the context (e.g., the chronological context) of the alarm list.

According to another aspect of the invention, there is provided an electric power system. The electric power system may comprise a primary system comprising primary system equipment; a secondary system operative to perform control and/or monitoring functions for the primary system; and the processing system of an aspect or embodiment operative to communicatively interface with the secondary system to obtain the monitoring data.

Various effects and advantages are attained by the electric power system. The processing system is operative to enable the operator input to provide additional information on one or several alarms, and to attain this while maintaining the context within the alarm list. The processing system is operative to, responsive to the operator input, integrate the additional information into the alarm list output via the HMI while maintaining the order of the several list elements and, thus, the context. The integration of the additional information into the alarm list also obviates the need for the operator to potentially switch between different screens (one for the alarm list, another one for the additional information), facilitating handling of a situation in which electric power system that has given rise to the alarm. The risk of incorrect handling of a situation that causes an alarm in the electric power system (e.g., in a transmission grid and/or distribution grid) is thereby mitigated. The processing system contributes to safety and reliability of power grid operation.

The processing system may be operative to trigger at least one control action by controlling the HMI to enable the further operator input and cause the at least one control action to be performed responsive to the further operator input.

Thereby, the processing system can trigger corrective action(s) and/or mitigating action(s) as appropriate, responsive to the further operator input that can be enabled selectively dependent on that the additional information is being or has been output via the HMI in the context of the alarm list.

The electric power system may comprise a SCADA system which may comprise a control subsystem, wherein the processing system is operative to cause the control subsystem to perform a control action responsive to the further operator input.

Thereby, the processing system can trigger, via the SCADA control subsystem, at least one control action. This allows corrective action(s) and/or mitigating action(s) to be triggered.

The electric power system may comprise the HMI. The HMI may be installed in a control center, e.g., in a power transmission and/or distribution grid control room.

Thereby, the processing system aids a power grid operator in his/her complex tasks, e.g., by reducing the risk of the at least one alarm not included in the alarm flood going unnoticed.

The electric power system may comprise an electric power generation, transmission, and/or distribution system. The processing system may be operative to process the monitoring data to generate alarms for an electric power transmission and/or distribution grid.

Thereby, the processing system is operative for use in association with an electric power system for which conventional alarm processing techniques have shortcomings.

The electric power system may comprise an electric power transmission and/or distribution grid.

Thereby, the processing system is operative for use in association with an electric power system for which conventional alarm processing techniques have shortcomings.

The electric power system may comprise a high voltage direct current (HVDC) system. The electric power system may comprise a an inverter/converter comprising insulated gate bipolar transistor (IGBT)- or thyristor-based valves.

Thereby, the processing system is operative for use in association with an electric power system in which alarm processing is often particularly challenging, also due to the fact that the HVDC system often comprises redundant implementations of both primary system equipment and secondary system devices to ensure continuous operation in case of, e.g., maintenance or asset failure.

According to a further aspect of the invention, there is provided a processing method for an electric power system. The processing method comprises receiving, by a processing system, monitoring data during operation of the electric power system; processing, by at least one processing circuit of the processing system, the monitoring data and controlling, by the at least one processing circuit a HMI to: output an alarm list comprising several list elements arranged sequentially along a direction on the HMI, each of the several list elements providing information on at least one alarm of a plurality of alarms generated based on the monitoring data; enable an operator input to select a list element from the several list elements; and responsive to the operator input, enlarge the list element from a first size to a second size on the HMI to output additional information in relation to one or several alarms for which the list element provides the information, and concurrently shift one or several other list elements of the alarm list along the direction on the HMI to preserve an order of the several list elements on the HMI.

Various effects and advantages are attained by the processing method. The processing method enables the operator input to provide additional information on one or several alarms, and to attain this while maintaining the context within the alarm list. The processing method integrates, responsive to the operator input, the additional information into the alarm list output via the HMI while maintaining the order of the several list elements and, thus, the context. The integration of the additional information into the alarm list also obviates the need for the operator to potentially switch between different screens (one for the alarm list, another one for the additional information), facilitating handling of a situation in which electric power system that has given rise to the alarm. The risk of incorrect handling of a situation that causes an alarm in the electric power system (e.g., in a transmission grid and/or distribution grid) is thereby mitigated. The processing system contributes to safety and reliability of power grid operation.

Optional features of the processing method and the effects attained thereby may correspond to the features and associated effects described in association with the processing system.

The processing method may be performed automatically by the processing system according to an aspect or embodiment.

The method may be performed by or using the processing system to control and/or monitor the electric power system.

According to a further aspect of the invention, there is provided a control method of controlling primary system equipment and/or secondary system equipment of an electric power system (e.g., of a power distribution grid and/or a power transmission grid), comprising performing the processing method according to an aspect or embodiment and causing, by the processing system, a control action to be performed responsive to the further operator input received via the HMI.

Thereby, the effects attained in association with the processing method are attained and utilized in a control method.

According to a further aspect of the invention, there is provided an operating method of operating primary system equipment and/or secondary system equipment of an electric power system (e.g., of a power distribution grid and/or a power transmission grid), comprising performing the processing method according to an aspect or embodiment and operating, by the processing system, the primary system equipment and/or secondary system equipment of the electric power system responsive to the further operator input received via the HMI.

Thereby, the effects attained in association with the processing method are attained and utilized in a method of operating electric power system equipment.

According to a further aspect, there is provided machine-readable instruction code which, when executed by at least one programmable processing circuit, causes the at least one programmable processing circuit to perform the processing method, the control method, or the operation method according to any aspect or embodiment disclosed herein.

According to a further aspect, there is provided a non-transitory storage medium having stored thereon machine-readable instruction code which, when executed by at least one programmable processing circuit, causes the at least one programmable processing circuit to perform the processing method, the control method, or the operation method according to any aspect or embodiment disclosed herein.

Embodiments are also disclosed in the following list of numbered embodiments:
Embodiment 1: A processing system for electric power system control and/or electric power system monitoring, the processing system comprising:
   at least one interface operative to receive monitoring data during operation of the electric power system; and
   at least one processing circuit operative to process the monitoring data and to control a human machine interface, HMI, to: output an alarm list comprising several list elements arranged sequentially along a direction on the HMI, each of the several list elements providing information on at least one alarm of a plurality of alarms generated based on the monitoring data; enable an operator input to select a list element from the several list elements; and responsive to the operator input, enlarge the list element from a first size to a second size on the HMI to output additional information in relation to one or several alarms for which the list element provides the information, and concurrently shift one or several other list elements of the alarm list along the direction on the HMI to preserve an order of the several list elements on the HMI.
Embodiment 2: The processing system of embodiment 1, wherein the at least one processing circuit is operative to: identify, based on the monitoring data, an alarm flood comprising several identical alarms that are successively raised, wherein the several list elements comprise an alarm flood list element providing information on the several identical alarms of the alarm flood; and control the HMI such that the alarm flood list element comprises an indicator for a number of the several identical alarms that are successively raised in the alarm flood while the list element has the first size on the HMI.
Embodiment 3: The processing system of embodiment 2, wherein the at least one processing circuit is operative to control the HMI such that the indicator comprises a numerical indicator quantifying the number of the several identical alarms that are successively raised in the alarm flood.
Embodiment 4: The processing system of any one of the preceding embodiments, wherein the at least one processing system is operative to control the HMI to enlarge the list element from the first size to the second size along the direction while maintaining a transverse size of the list element in a transverse direction perpendicular to the direction unchanged.
Embodiment 5: The processing system of any one of the preceding embodiments, wherein the at least one processing circuit is operative to control the HMI to enable a further operator input while the list element has the second size on the HMI; and cause a control action to be performed responsive to the further operator input to address an alarm-triggering situation in the electric power system giving rise to the at least one alarm for which the list element provides information.
Embodiment 6: The processing system of embodiment 5, wherein the control action comprises an action affecting primary system equipment of the electric power system and/or secondary system equipment of the electric power system, the action being a corrective action or a mitigating action.
Embodiment 7: The processing system of embodiment 5 or embodiment 6, wherein the control action comprises any one or several of the following control actions related to an alarm of the alarm list: delegating the alarm; marking the alarm; acknowledging the alarm; searching for past occurrences, past resolutions, and/or documentation about the alarm; navigating to a geographic or technical point of origin of the alarm; initiating a communication link; initiating a maintenance ticket.
Embodiment 8: The processing system of any one of the preceding embodiments, wherein the at least one processing circuit is operative to: determine an alarm severity for the one or several alarms for which the list element provides information; and responsive to a verification that the alarm severity fulfils a severity flag criterion, control the HMI to output a severity flag while the list element is enlarged to the second size.
Embodiment 9: The processing system of any one of the preceding embodiments, wherein the at least one processing circuit is operative to control the HMI to shift the one or several other list elements of the alarm list such that the list element enlarged to the second size is arranged adjacent the one or several other list elements in a non-overlapping manner.
Embodiment 10: The processing system of any one of the preceding embodiments, wherein the at least one processing circuit is operative to control the HMI such that the additional information is determined from the monitoring data in a manner that is dependent on an alarm type of the at least one alarm for which the list element provides the information.
Embodiment 11: The processing system of any one of the preceding embodiments, wherein the at least one processing circuit is operative to determine, based on the monitoring data, a time horizon related to an alarm time with which the list element is associated, and to control the HMI such that the additional information comprises one, several, or all of the following: a graph representing an electric characteristic of the electric power system as a function of time over the time horizon; an event history of electric power system events as a function of time over the time horizon; an additional list of similar alarms triggered over the time horizon.
Embodiment 12: The processing system of any one of the preceding embodiments, wherein the at least one processing circuit is operative to control the HMI such that the additional information comprises one, several, or all of the following: a line graph; a bar chart; a numerical value; a series of numerical values; a meter; a list; a textual description; an icon; an icon sequence.
Embodiment 13: An electric power system, comprising: a primary system comprising primary system equipment; a secondary system operative to perform control and/or monitoring functions for the primary system; and the processing system of any one of the preceding embodiments operative to communicatively interface with the secondary system to obtain the monitoring data.
Embodiment 14: A processing method for an electric power system, the processing method comprising: receiving, by a processing system, monitoring data during operation of the electric power system; processing, by at least one processing circuit of the processing system, the monitoring data and controlling, by the at least one processing circuit, a human machine interface, HMI, to: output an alarm list comprising several list elements arranged sequentially along a direction on the HMI, each of the several list elements providing information on at least one alarm of a plurality of alarms generated based on the monitoring data; enable an operator input to select a list element from the several list elements; and responsive to the operator input, enlarge the list element from a first size to a second size on the HMI to output additional information in relation to one or several alarms for which the list element provides the information, and concurrently shift one or several other list elements of the alarm list along the direction on the HMI to preserve an order of the several list elements on the HMI.
Embodiment 15: Machine-readable instruction code which, upon execution by at least one programmable processing circuit, causes the at least one programmable processing circuit to perform the method of embodiment 14.

Various effects and advantages are attained by embodiments of the invention. For illustration, the processing systems and methods according to embodiments provide enhanced techniques of processing alarms that mitigate the risk of inadequate handling of alarms, thereby contributing to the safety and reliability of power grid operation. The processing system and method can be used in association with an electric power grid or subsystems thereof, without being limited thereto.

### BRIEF DESCRIPTION OF THE DRAWINGS

Embodiments of the invention will be described with reference to the drawings in which similar or identical reference signs designate elements with similar or identical configuration and/or function.
Fig. 1 is a block diagram of a processing system.
Fig. 2 is a schematic representation of HMI output generated under the control of the processing system.
Fig. 3 is a schematic representation of HMI output generated under the control of the processing system.
Fig. 4 is a schematic representation of HMI output generated as part of additional information under the control of the processing system.
Fig. 5 is a schematic representation of HMI output as part of additional information generated under the control of the processing system.
Fig. 6 is a schematic representation of HMI output as part of additional information generated under the control of the processing system.
Fig. 7 is a schematic diagram of an electric power system comprising the processing system.
Fig. 8 is a flow chart of a processing method.
Fig. 9 is a flow chart of a process useful in the processing method.
Fig. 10 is a schematic representation of HMI output generated under the control of the processing system.
Fig. 11 is a flow chart of a process useful in the processing method.
Fig. 12 is a schematic representation of HMI output generated under the control of the processing system.
Fig. 13 is a schematic representation of a system comprising the processing system.
Fig. 14 is a schematic representation of an electric power system.
Fig. 15 is a schematic representation of an electric power system.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to processing systems and methods capable of processing monitoring data and control an HMI based on monitoring data for an electric power system. While embodiments will be described in detail primarily in association an electric power system that comprises a power transmission and/or power distribution system, the embodiments are not limited thereto.

As used herein, the term "electric power system" encompasses an electric power generation, transmission, and/or distribution system, e.g., an electric power grid or parts thereof.

As used herein, the term "power grid" encompasses a power transmission grid and/or a power distribution grid. The power grid may comprise both a power transmission grid and a power distribution grid. The term "power grid" encompasses a microgrid, optionally a microgrid comprising a distributed energy resource (DER).

As used herein, the term "monitoring data" encompasses measurements and event-based data. The monitoring data may comprise measurements and/or event-based data (e.g., GOOSE messages). The measurements may comprise any one or any combination of measurements related to electric variables of a power grid or components thereof (such as voltages, currents, phasor measurement unit (PMU) measurements, and/or frequency measurements), switchgear status (such as an open / closed status of an isolator and/or breaker), thermal variables (such as temperature measurements), insulation parameters (such as dissolved gas analysis (DGA) concentrations of an insulation oil or other insulation fluid, insulation moisture content, etc.). The monitoring data may be received by the processing system from secondary system components (e.g., intelligent electronic devices (IEDs)) of the electric power system.

As used herein, the term "alarm" may encompass alarms having various priorities (such as priorities assigned to an ordinal range of values, e.g., low / medium / high). Techniques for generating alarms are available to the skilled person, e.g., from applicant's commercial products. Techniques for generating alarms based on monitoring data may comprise comparing the monitoring data to nominal operating conditions defined for the electric power system. Various techniques of determining whether an alarm is to be raised are available to the skilled person. More advanced techniques may be used, such as techniques that perform power flow computation to anticipate potentially critical situations. With such techniques being available to the skilled person, the skilled person can use any of these known techniques for implementing the alarm generation based on monitoring data.

As used herein, the term "alarm list" refers to a sequence of list elements. Each list element may be associated with a single alarm or a several alarms (e.g., in the case of an alarm flood in which an identical alarm is raised in a temporally consecutive repeating manner without any intervening different alarms). Each list element may be associated with an alarm time, e.g., with the time at which the alarm on which the list element provides information is raised (if the list element is associated with and provides information on a single alarm), or with the most recent one of several alarm times of the alarms on which the list element provides information (if the list element is associated with and provides information on several alarms). The list elements of the alarm list may be ordered in accordance with an ordering criterion, such as time-based, importance-based, or context based. While reference will be made to time-based ordering in association with embodiments, the techniques disclosed herein are applicable also when other ordering criteria are employed, such as importance-based or context based.

As used herein, the terms "first size" and "second size" of a list element can refer in particular to a size on a display of an HMI, measured along a direction along which different list elements of the alarm list are arranged.

While the operation of the processing system and method will be explained in association with an operator input that selects "a list element," the processing system and method are operative to perform the operations for any one of several list elements of an alarm list. I.e., the processing system and method are operative to repeat the various operations continually (i.e., on an ongoing basis), enabling operator input that selects a list element, providing additional information on the alarm(s) related to that list element, and, optionally, causing a control action responsive to a further operator input enabled by the processing system.

As used herein, "enabling an operator input" and/or "enabling a further operator input" encompasses any one of a variety of input modalities, such as any one or any combination of the following, without being limited thereto: operator input via a pointer device (such as a computer mouse or touchpad); operator input via a touch-sensitive or proximity-sensitive screen or display of the HMI; operator input via voice commands in association with speech recognition and processing (using, e.g., an acoustoelectric transducer in association with a sound processing circuit); operator input via a gaze or eye tracker (using, e.g., a camera in association with a gaze or eye tracker processing).

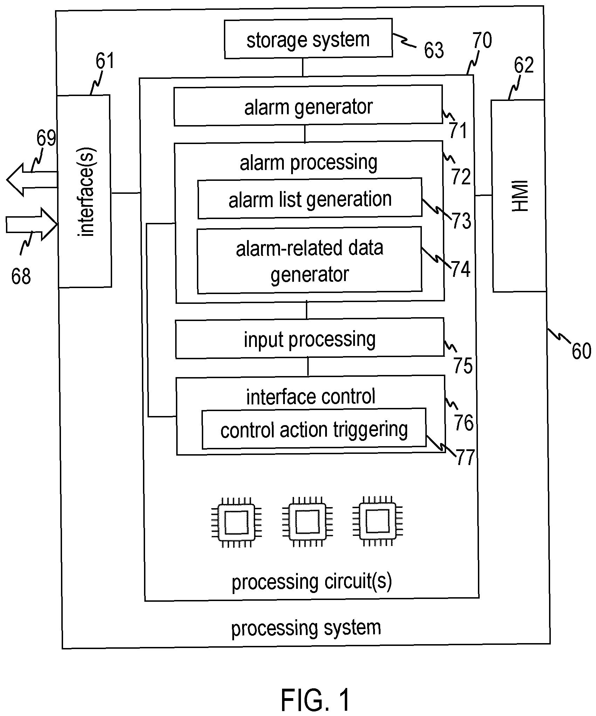

Fig. 1 shows a block diagram representation of the processing system 60. The processing system 60 comprises an at least one interface 61. The at least one interface 61 may comprise a data interface or other communication interface. The at least one interface 61 is operative to receive monitoring data 68 obtained for an electric power system. The monitoring data may comprise measurements. The measurements may comprise any one or any combination of measurements related to electric variables of a power grid or components thereof (such as voltages, currents, phasor measurement unit (PMU) measurements, and/or frequency measurements), thermal variables (such as temperature measurements), insulation parameters (such as dissolved gas analysis (DGA) concentrations of an insulation oil or other insulation fluid, insulation moisture content, etc.). The monitoring data may be received by the processing system from secondary system components (e.g., intelligent electronic devices (IEDs)) of the electric power system. Additionally or alternatively to measurements, the monitoring data 68 may comprise event-based data (e.g., GOOSE messages).

The processing system 60 may comprise an HMI 62. The HMI 62 may comprise an HMI installed in a power transmission system control room and/or power distribution system control room. The HMI 62 may comprise an HMI installed in a power grid control room (e.g., in a national or regional control center). The HMI 62 is operative to output an alarm list comprising alarms that are generated during field operation of the electric power system, responsive to the received monitoring data.

The processing system 60 may comprise a storage system 63 or may be communicatively interfaced with the storage system 63. The storage system 63 may have stored therein data defining which type of additional information (e.g., which key performance indicators (KPI)s) are to be provided as additional information for a list element of the alarm list when the list element is enlarged from a first size to a second size.

The processing system 60 comprises at least one processing circuit 70. In the illustrated implementation, the at least one processing circuit 70 is operative to perform an alarm generation 71. The alarm generation 71 may determine which type of alarm is to be raised (e.g., line-ground fault, line-line-ground fault, overvoltage condition, overcurrent condition, other fault types) and, optionally, a severity of the alarm. The alarm generation 71 may process the received monitoring data 68 to determine whether and when an alarm is to be raised. To this end, the alarm generation 71 may compare an electric power system state as reflected by the monitoring data 68 to the nominal operation ranges of the power system components and/or may infer trends from the monitoring data 68 to anticipate potential future critical situations. Techniques of generating alarms are available to the skilled person from, e.g., applicant's commercially available products. The skilled person has at his/her disposal a wide variety of techniques of generating alarms, which can be used to implement the alarm generation.

The at least one processing circuit 70 is operative to perform an alarm processing 72. The alarm processing 72 may comprise an alarm list generation 73 operative to generate the alarm list comprising several list elements. The at least one processing circuit 70 comprises an interface control 76 operative to control the HMI 62 to output the alarm list (e.g., via a display, screen, or other optical output device of the HMI 62), with the list elements being arranged sequentially along a direction on the HMI 62. Each of the several list element provides information on at least one alarm of a plurality of alarms generated by the alarm generator 71 based on the monitoring data 68. The interface control 76 is operative to control the HMI 62 to enable an operator input to select a list element from the several list elements output via the HMI. The at least one processing circuit 70 comprises an input processing 75 operative to process the operator input (and, if applicable, a further operator input will be described below). The alarm processing 72 comprises an alarm-related data generator 74 that generates additional information on the alarm selected by the operator input. The at least one processing circuit 70 is operative such that the interface control 76, responsive to the operator input, controls the HMI to enlarge the enlarge the list element selected by the operator input to include additional information provided by the alarm-related data generator 74. The interface control 76 is operative to control the HMI 62 such that, responsive to the operator input, the list element selected by the operator input is enlarged a first size to a second size on the HMI (e.g., on a display, screen, or other optical output device of the HMI) to output additional information in relation to one or several alarms for which the list element provides the information. The interface control 76 is operative to control the HMI 62 to concurrently shift one or several other list elements of the alarm list along the direction on the HMI to preserve an order of the several list elements on the HMI. Thereby, the processing system 60 is operative such that the additional information is output via the HMI 62, responsive to the operator input enabled by the processing system 60, while continuing to provide the context in which the alarm(s) are raised. For illustration, for an alarm list ordered in accordance with alarm time (i.e., the time at which the alarm generator 71 raises the respective alarm), the additional information is included into the alarm list view, while the temporally preceding and/or temporally subsequent alarm list elements are still shown adjacent to the list element extended to the second size. The processing system 60 is operative such that the additional information is output via the HMI 62, responsive to the operator input enabled by the processing system 60, in the context of the alarm list and without having to switch to a different screen layout in which the alarm list is partially or fully occluded from view.

The at least one processing circuit 70 may be operative to enable a further operator input selectively dependent on that the list element is being output or has been output in the second size, in which the additional information is provided. The at least one processing circuit 70 may be operative to monitor the further operator input. The input processing 75 may be operative to determine whether the further operator input is received, which further operator input triggers a control action to be performed. The at least one processing circuit 70 may comprise a control action triggering 77 operative to control the at least one interface 61 to cause the control action to be performed, responsive to the further operator input and in association with the alarm(s) for which the list element provides information. The at least one processing circuit 70 may be operative to generate and provide output 69 via the at least one interface 61, which output 69 may comprise control commands acting on, for example, primary system equipment or secondary system equipment of the electric power system.

The at least one processing circuit 70 is operative to cause the control action to be performed to mitigate or correct the situation giving rise to the alarm(s) with which the list element selected by the operator input is associated. The control action may comprise a control action acting on primary system equipment or secondary system equipment of the electric power system (e.g., of an electric power grid). The control action may comprise a control action useful for alarm handling. The control action may comprise a control action operative to cause any one or any of combination of:
- delegating, responsive to the further operator input and by the processing system, the alarm to someone else or to an automated agent;
- marking, responsive to the further operator input and by the processing system, the alarm as "no action required;"
- acknowledging, responsive to the further operator input and by the processing system, the alarm;
- searching, responsive to the further operator input and by the processing system, for past occurrences, resolutions, or documentation about the alarm;
- navigating, responsive to the further operator input and by the processing system, to the geographic or technical point of origin of the alarm (e.g., in a control system);
- initiating, responsive to the further operator input and by the processing system, a telecommunications connection with a responsible organization or person;
- initiating, responsive to the further operator input and by the processing system, a maintenance ticket with a control system administrator;
- initiating, responsive to the further operator input and by the processing system, a maintenance ticket with an asset owner.

To perform the mentioned operations, the at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

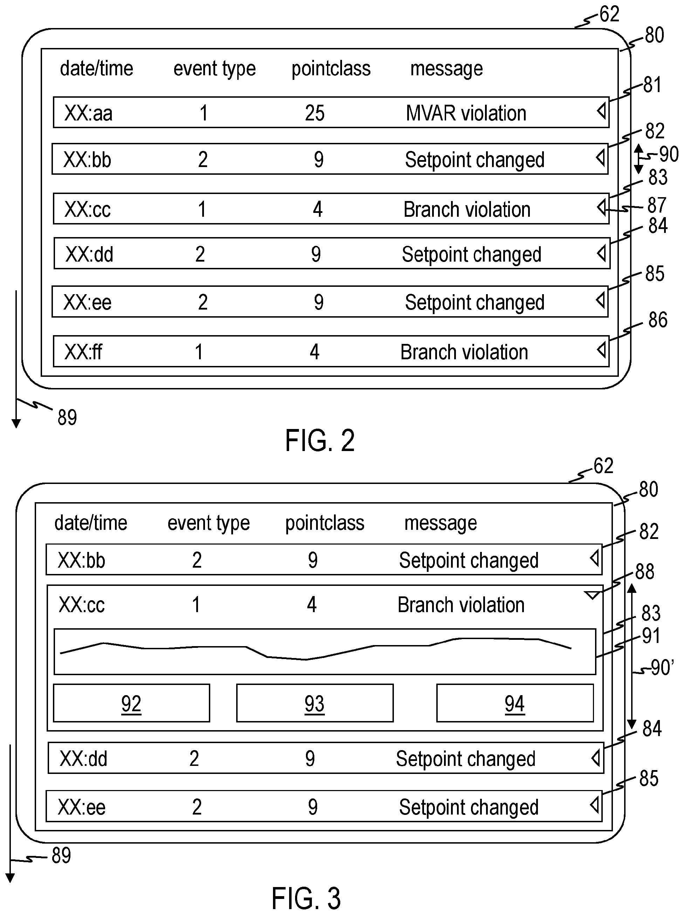

Operation of the processing system 60 may be explained in further detail in association with exemplary control operations with reference to Fig. 2, Fig. 3, Fig. 4, Fig. 5, and Fig. 6.

Fig. 2 shows an exemplary layout of an alarm list 80 output via the HMI 62. The alarm list 80 comprises several list elements 81, 82, 83, 84, 85, 86 arranged sequentially along a direction 89. Each of the list elements is associated with at least one alarm in the sense that it provides information on the at least one alarm. The alarm list may be generated under the control of the processing system 60, such that no alarm is included in more than one list element. Each list element, even when displayed in the first size 90 illustrated in Fig. 2, comprises information on one or several alarms associated with the list element. The information may comprise a timing information (such as date and time), an event type, a point clause, and a message associated with the at least one alarm for which the respective list element provides information. Each of the list elements may comprise an operable element 87, which may be implemented as a soft button. The processing system 60 is operative to control the HMI 62 to enable an operator input, e.g., by actuation of the operable element 87 of a list element, which selects the respective list element.

Fig. 3 shows an exemplary layout of the alarm list 80 output via the HMI a 62 under the control of the processing system 60, as modified responsive to the operator input. The list element (in the illustrated example list element 83) is enlarged to a second size 90' measured along the direction 89. Concurrently, at least one other list element 82, 84 is shifted along the direction 89 to allow the list element 83 selected by the operator input to be enlarged to the second size 90', without changing the order of the list elements in the alarm list (thereby maintaining the context of the list element 83 with its preceding list element 82 and its subsequent list element 84), without occluding any of the adjacent list elements 82, 84, and without changing the HMI may output to a view different from the alarm list view 80. The processing system 60 is operative to enlarge the list element 83 selected by the operator input to the second size 90' along the direction 89, while keeping a transverse size measured perpendicular to the direction 89 constant.

The processing system 60 is operative such that the list element 83 enlarged to the second size 90' comprises the additional information 91, 92, 93, 94. The additional information may comprise at least one graphics (such as a line graph 91, bar graph, or other graphics) representing a time evolution of at least one electric characteristics of the electric power system as a function of time, with the at least one electric characteristics being related to the alarm on which the list element 83 provides information.

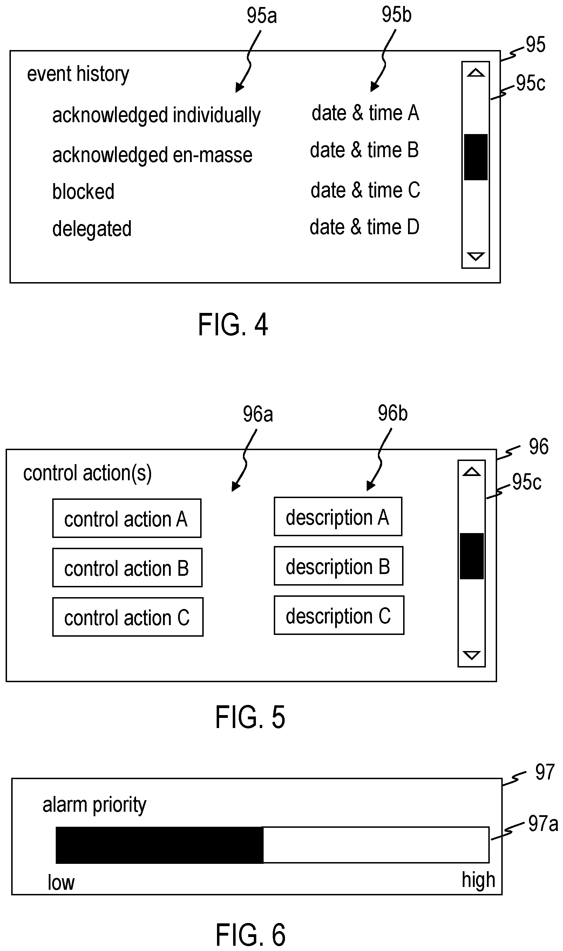

The processing system 60 may be operative such that the additional information 92, 93, 94 may comprise one or several KPIs associated with the alarm on which the list element 83 provides information. The additional information 92, 93, 94 may comprise any one or any combination of the following, respectively related to the alarm on which the lest element 83 provides information: a line graph; a bar chart; a numerical value; a series of numerical values; a meter (Fig. 6); a list, such as an event history list (Fig. 4) and/or a list of control actions (Fig. 5); a textual description; an icon; an icon sequence.

The processing system 60 may be operative such that the type of additional information 91, 92, 93, 94 depends on the alarm type (e.g., the pointclass) of the alarm on which the list element 83 provides information. The processing system 60 may be operative such that the alarm-related data generator 74 determines which additional information is to be output for the respective alarm type (e.g., for the respective pointclass). The processing system 60 may be operative such that the interface control 76 controls the HMI 62 based on which additional information (in particular which types of additional information) are to be output for the respective alarm type. The processing system 60 may be operative such that the arrangement of different KPIs in the additional information and even the second size 90' is dependent on the alarm type. For illustration, for some types of alarms, it may be sufficient that the list element being enlarged to a second size 90' in which the additional information is included in a single row, possibly in several columns (such as from at least two to at most five columns). In this case, the processing system 60 is operative to control the HMI 62 such that the additional information is included in a single row, possibly in several columns. For other types of alarms, more additional information (e.g., a greater number of KPIs) may be appropriate. In this case, the processing system 60 may be operative to control the HMI 62 such that the additional information is included in two or three or more than three rows, possibly in several columns. The number of columns may be different for each of the rows, as illustrated in Fig. 3.

The processing system 60 may be operative such that, when enlarged to the second size 90', the list element selected by the operator input comprises a further actuation element 88 that allows the selected list element to be collapsed to the first size 90. Responsive to detecting actuation of the further actuation element 88, the processing system 60 may be operative to control the HMI 60 to collapse the list element 83 back to the first size (removing the additional information 91, 92, 93, 94 from view), while shift other list elements 82, 84 of the alarm list view to maintain so that they remain adjacent to and non-overlapping with the list element 83.

Fig. 4 illustrates an example of a panel 95 that may be included in the additional information 92, 93, or 94. The panel 95 comprises an event history of events related to the alarm. The event history may comprise a list of events 95a related to the alarm and an occurrence date and time 95b of the respective events. The processing system 60 may be operative to control the HMI 62 such that the panel 95 comprises a selector element 95c that allows the operator to scroll through the event history, still within the alarm list view 80 that shows the list element selected by the operator input in the context of the alarms of the alarm list.

Fig. 5 illustrates an example of a further panel 96 that may be included in the additional information 92, 93, or 94. The further panel 96 comprises at least one possible control action that is suitable for the alarm for which the list element selected by the operator input provides information. The processing system 60 may, thus, be operative to control the HMI 62 to enable the further operator input selecting a control action selectable within the additional information in the list element. The processing system 60 may be operative to cause, responsive to the further operator input, the control action to be performed. Thereby, the processing system 60 is operative to enable the further operator input to cause the control action to be performed without having to switch to an HMI screen view different from the alarm list view 80. The processing system 60 is operative to enable the further operator input to cause the control action to be performed from within the alarm list view 80, while preserving the context of the alarm with other alarms in the alarm list and without having to switch to an HMI screen view different from the alarm list view 80. The activation areas that enable the further operator input may, thus, be integrated into the additional information that is output when the list element is enlarged to the second size 90'. Thereby, the processing system 60 may be operative to ensure that the control action is triggered conditionally dependent on the additional information being displayed or having been displayed.

The further panel 96 may comprise a list 96a of several control actions. The further panel 96 may optionally comprise a description 96b for one, several, or all of the control actions. The processing system 60 may be operative to control the HMI 62 such that the further panel 96 comprises a selector element 96c that allows the operator to scroll through the list of possible control actions, still within the alarm list view that shows the list element selected by the operator input in the context of the alarms of the alarm list.

Fig. 6 illustrates an example of a meter 97 that may be included in the additional information 92, 93, or 94. The meter 97 may comprise a graph 97a that quantitatively represents a characteristic of the alarm, such as an alarm priority.

It will be appreciated that the representations and Fig. 4, Fig. 5, and Fig. 6 are illustrative and that additional or alternative types of additional information may be output via the HMI 62 under the control of the processing system 60.

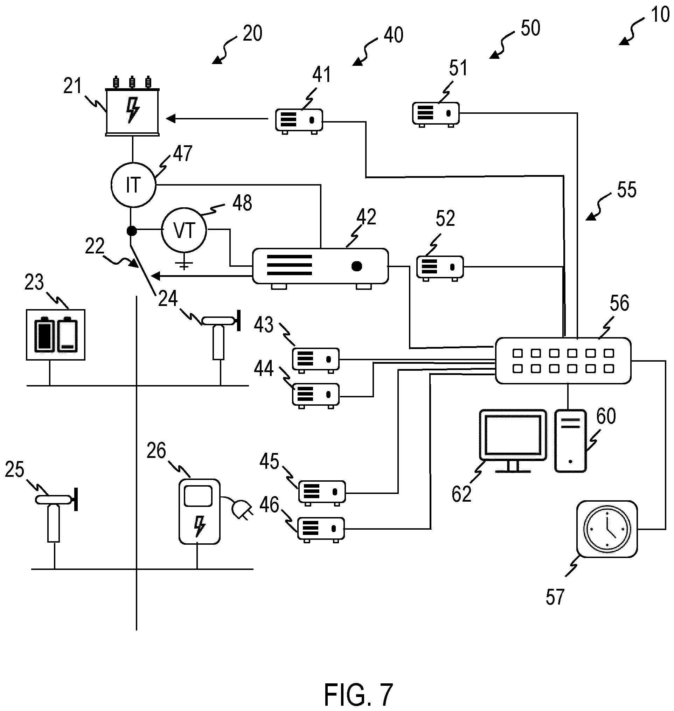

Fig. 7 is a schematic representation of an electric power system 10 according to an embodiment. The electric power system 10 comprises a primary system 20. The primary system 20 may be or may comprise an electric power generation, transmission, and/or distribution system, e.g., a power transmission and/or power distribution grid or part thereof. The primary system 20 may comprise at least part of an electric power grid.

The primary system 20 may comprise switchgear such as switches or circuit breakers (CBs) 22, transformers 21, and other primary system equipment. The electric power system 10 may have renewables penetration, with the primary system 20 comprising renewable energy resources 24, 25, energy storage systems (ESS), such as battery storage systems 23. The primary system 20 may also comprise charging infrastructure 26. Such components of non-conventional AC power systems add to the complexity of the electric power system dynamics. In such cases, the processing system 60 is particularly useful, without being limited to such use cases.

The system 10 comprises a secondary system 40. The secondary system 40 comprises a plurality of devices 41, 42, 43, 44, 45, 46. The secondary system 40 comprises measurement instrumentation 47, 48. At least some of the devices 41, 42, 43, 44, 45, 46 of the secondary system 40 may be operative to execute a decision logic to implement a control of components of the primary system 20, such as switchgear 22 or a transformer 21. At least some of the devices 41, 42, 43, 44, 45, 46 of the secondary system 40 may be operative to execute a decision logic based on measurements, such as measurements received from measurement instrumentation 47, 48. The secondary system device(s) 41, 42, 43, 44, 45, 46 may comprise merging units (MUs) operative to provide monitoring data to the processing system 60. Alternatively or additionally, the secondary system device(s) 41, 42, 43, 44, 45, 46 may be operative to provide event-based messages to the processing system 60 as part of the monitoring data. Examples for devices 41, 42, 43, 44, 45, 46 of the secondary system comprise protection relays or other IEDs which may be operative to perform distance protection or time protection or other protection functions. The measurement instrumentation of the secondary system 40 may comprise a current transformer 47, in voltage transformer 48, phasor measurement units, frequency measurement units, or other measurement instrumentation such as measurement instrumentation operative to measure temperature(s), insulation-state related data (such as dissolved gas analysis (DGA) concentrations in an insulation oil or other insulation fluid, or insulation moisture).

The electric power system 10 may optionally comprise a redundancy system 50 which provides redundant implementations for at least some of the functions performed by the devices 41, 42, 43, 44, 45, 46 of the secondary system 40. The redundancy system 50 may be implemented in various ways. For illustration, there may be a dedicated redundant device 51, 52 associated with one of the devices of the secondary system 40 in a one-to-one-correspondence. Other implementations are possible. For illustration, there may be a centralized redundancy system which may provide redundancy for functions performed by several of the secondary system devices 41, 42, 43, 44, 45, 46.

The system 10 comprises a communication system 55. The communication system 55 may comprise a communication network. The communication system 55 may comprise a plurality of communication links by which devices of the secondary system 40 communicate with each other and with the processing system 60. Communication may be performed using communication devices such as gateway devices 58.

As described in more detail herein, the processing system 60 is operative to process monitoring data to generate alarms and control the HMI 62 to output an alarm list view, enable an operator input that selects a list element of the alarm list, enlarge the list element to include additional information on the alarm(s) for which the list element provides information, enable a further operator input conditionally dependent on the additional information being displayed or having been displayed, and cause a control action to be performed responsive thereto. The output 69 may comprise control commands to control, e.g., secondary system devices 41, 42, 43, 44, 45, 46 and/or redundancy system devices 51, 52 and/or the HMI 62.

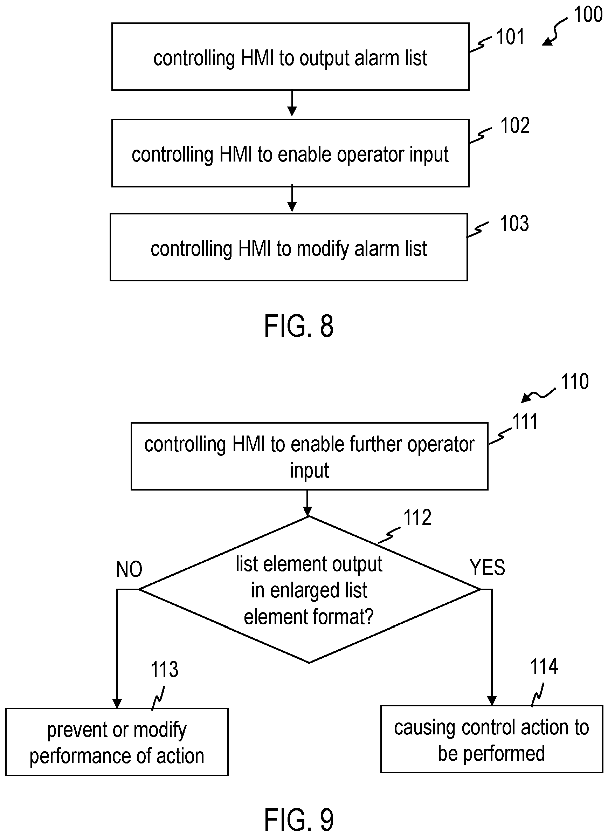

Fig. 8 is a flow chart of a method 100. The method 100 may be performed automatically by the processing system 60.

At process block 101, the processing system 60 controls the HMI 62 to output the alarm list 80. The processing system 60 may control the HMI 62 such that the alarm list 80 comprises several list elements, each providing information on at least one alarm.

At process block 102, the processing system 60 controls the HMI 62 to enable an operator input that selects a list element from the alarm list.

At process block 103, the processing system 60 controls the HMI 62 to modify the alarm list view 80 responsive to and based on the operator input. Process block 103 may comprise enlarging the list element selected by the operator input at process block 102 to the second size 90' and causing the HMI 62 to output additional information related to the alarm on which the selected list element provides the information. Process block 103 may comprise concurrently shifting other list elements of the alarm list to allow the list element selected by the operator input at process block 102 to be arranged to the second size 90' without altering an order of list elements in the alarm list and without occluding an adjacent list element. Process block 103 may further comprise enabling a further operator input and causing a control action to be performed responsive to the further operator input.

Fig. 9 is a flow chart of a procedure 110. The procedure 110 may be performed automatically by the processing system 60. The procedure 110 may be performed in process block 103 of the method 100 of Fig. 8.

At process block 111, the processing system 60 controls the HMI 62 to enable the further operator input.

At process block 112, the processing system 60 determines whether the list element to which the further operator input pertains is currently or has previously been enlarged to the second size, in which the additional information is output. This may comprise an inherent verification, e.g., by ensuring that the further operator input is only enabled while the list element is being enlarged to the second size 90'.

At process block 114, responsive to verifying that the list element to which the further operator input pertains is currently or has previously been enlarged to the second size, the processing system 60 causes the control action to be performed. The processing system may cause the control action 60 to be performed responsive to the further operator input, conditionally dependent on the verification at process block 112. The control action may comprise a corrective or mitigating action that addresses the situation triggering the alarm, without being limited thereto

At process block 113, responsive to verifying that the list element to which the further operator input pertains is not and was not previously enlarged to the second size, the processing system 60 may prevent or modify the performance of the control action. Modifying the control action may comprise performing a control action that affects the electric power system less strongly than the control action specified by the further operator input, unless the additional information related to the alarm is output. Modifying the control action may comprise controlling the HMI 62 to force the operator to acknowledge the additional information.

The processing system 60 may be operative to identify an alarm flood and to control the HMI 62 based on the identified alarm flood. In particular, the processing system 60 may be operative to identify an alarm flood in which an identical alarm (i.e., an alarm having a same event type, pointclass, and message, but not necessarily a same alarm time) is raised consecutively several times without any intervening other alarm. The processing system 60 may be operative to determine a number of times the identical alarm is consecutively raised and control the HMI 62 to output a quantitative indicator for the number of times of the identical alarm in the alarm flood. The processing system 60 may be operative to control the HMI 62 to output a single line annunciation of the alarm flood, optionally including the quantitative indicator for the number of times of the identical alarm in the alarm flood.

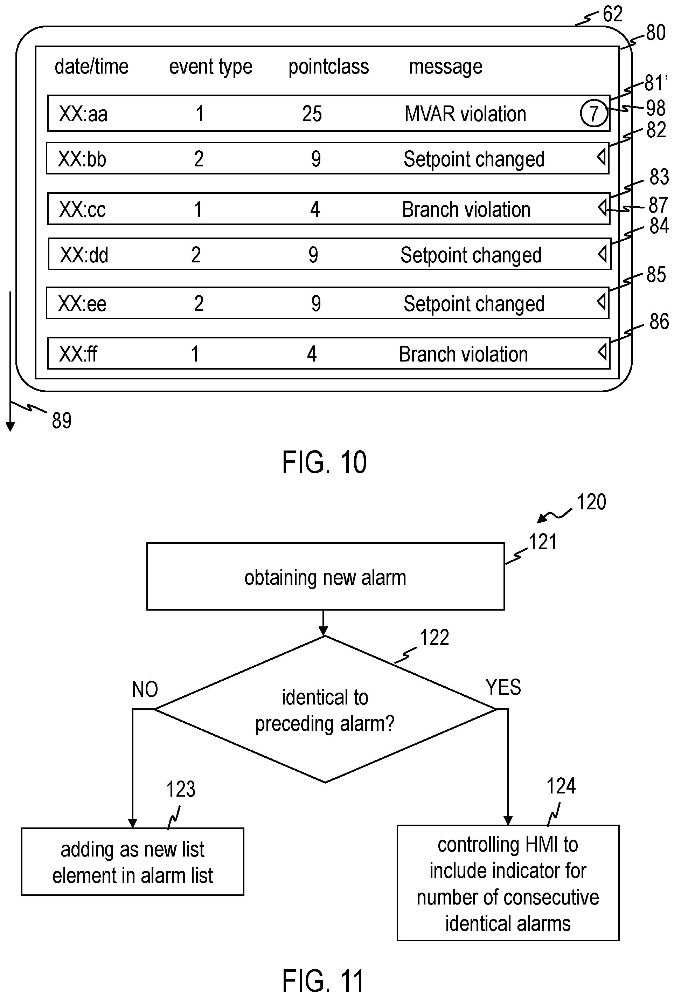

Fig. 10 illustrates the alarm list view 80 comprising an indicator 98 for a number of times the identical alarm is consecutively raised. In this case, the list element 81 comprises information related to the several alarms in the alarm flood. The additional information 91, 92, 93, 94 may comprise information on a timing of the several alarms in the alarm flood.

The processing system 60 may be operative such that the list element 81 related to the alarm flood can be enlarged to the second size 90'. The processing system 60 may be operative to control the HMI 62 such that the quantitative indicator 98 is displayed instead of the symbol 97 for a list element relating to an alarm flood. The processing system 60 may be operative to control the HMI 62 to enable an operator input, such as by selection of the quantitative indicator 98, which causes the processing system 60 to control the HMI a 62 to enlarge the list element 81 to the second size 90'.

Fig. 11 is a flow chart of a procedure 120. The procedure 120 may be performed automatically by the processing system 60. The procedure 120 may be performed in process block 101 of the method 100 of Fig. 8.

At process block 121, the processing system 60 obtains a new alarms generated by the alarm generator 71.

At process block 122, the processing system 60 determines whether the new alarm is identical to the immediately preceding alarm generated by the alarm generator 71. Determining whether the new alarm is identical to the immediately preceding alarm may comprise verifying that an event type, pointclass, and alarm message are identical to those of the preceding alarm. Thus, consecutive alarms are considered to be identical even if they have different alarm times, provided that they are identical in the other respects (such as in all of event type, pointclass, and alarm message).

At process block 123, responsive to determining that the new alarm is not identical to the immediately preceding alarm, the processing system 60 controls the HMI 62 to at a new list element representing the new alarm to the alarm list 80.

At process block 124, responsive to determining that the new alarm is identical to the preceding alarm, the processing system 60 controls the HMI 62 to include or update the indicator 98 that provides a quantitative indicator for a number of consecutive identical alarms.

Incorporation of the indicator 98 that quantifies the number of consecutive identical alarms into the alarm list view 80 facilitates handling of situations in which an identical alarm is raised repeatedly. Such situations can occur in practice, in particular with increasing the deployment of modern technologies such as renewable energy sources and/or HVDC systems.

The processing system 60 may be operative to perform an assessment of a severity of different alarms. The processing system 60 may be operative to determine the severity of each of the alarms, based on, for example, parsing of alarm messages, evaluating point classes or even types, or otherwise. The processing system 60 may be operative to use a trained Al or ML model, such as an LLM model, to determine the severity of each of the alarms. The Al or ML model may be trained using labeled training data comprising alarms and associated alarm severity. Parameters of the trained Al or ML model to be stored locally in the storage system 63 or may be provided remotely from the processing system 60, enabling the processing services system 60 to communicatively interface with the Al or ML model to determine the alarm severity. The processing system 60 may be operative to control the HMI 62 such that the alarm list view 80 includes a flag if the severity of an alarm fulfills a flag rising criterion (such as having a severity greater than a threshold). The processing system 60 may be operative to control the HMI 62 such that the flag is output selectively at least when the list element is enlarged to the second size 90'.

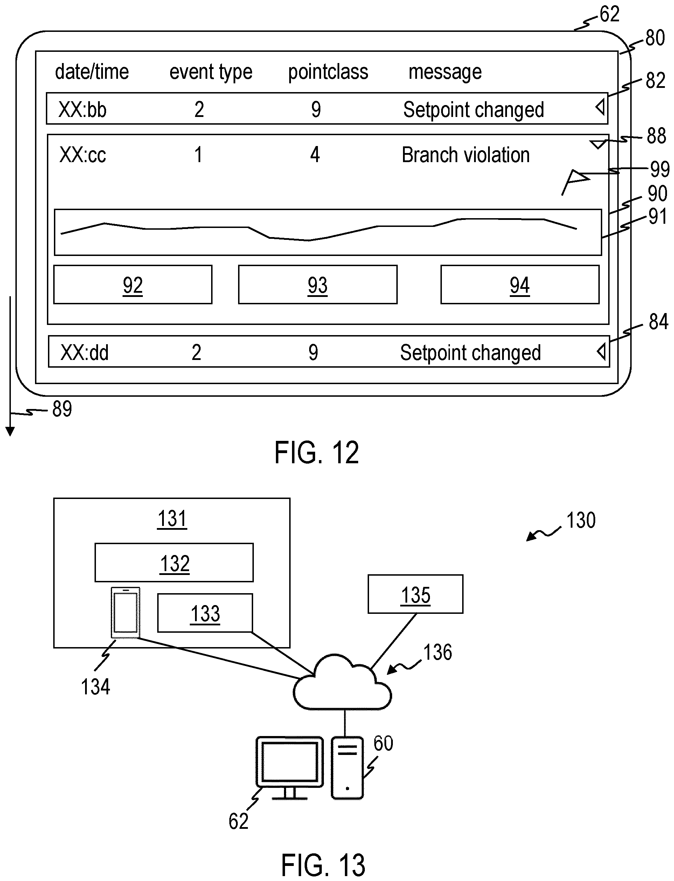

Fig. 12 illustrates the alarm list view 80 comprising a flag 99 marking an alarm for which the determined alarm severity fulfills the flag racing criterion. Inclusion of such a flag facilitates the handling of alarms based on severity.

Fig. 13 is a schematic representation of a system 130 which comprises an electric power grid 131. The electric power grid comprises primary system equipment 132, which may be an asset, such as a transformer, a converter/inverter of an HVDC system, a valve hall of an HVDC system, without being limited thereto. The system 130 comprises an operator communication system 133 of a power grid operator. The processing system 60 may be operative, responsive to the further operator input, to automatically establish a communication link to the operator communication system 133 or a terminal device 134 of the operator. Thereby, information on alarm occurrence and/or alarm handling can be provided, and/or a corrective or mitigating action can be automatically triggered (such as by automatic deployment of maintenance personnel). Alternatively or additionally, the system 130 may comprise an asset responsible system 135 of a party responsible for an asset involved in the alarm. The processing system 60 may be operative, responsive to the further operator input, to automatically establish a communication link to the asset responsible system 135. Thereby, information on alarm occurrence and/or alarm handling can be provided, and/or a corrective or mitigating action can be automatically triggered.

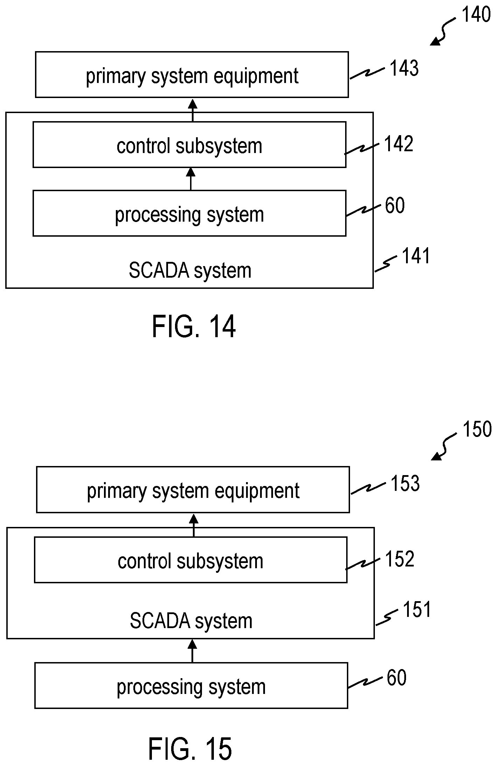

Fig. 14 shows a schematic representation of an electric power system 140 according to an embodiment. The electric power system 140 comprises primary system equipment 143 and a SCADA system 141. The SCADA system 141 comprises the processing system 60 and a SCADA control subsystem 142 communicatively interfaced with the processing system 60. The SCADA control subsystem 142 is operative to perform control actions responsive to the output 69 provided by the processing system 60. The control actions may be dependent on the further operator input enabled by the processing system 60.

Fig. 15 shows a schematic representation of an electric power system 150 according to an embodiment. The electric power system 150 comprises primary system equipment 153 and a SCADA system 151. The SCADA system 60 comprises a SCADA control subsystem 152. The SCADA system 151 is communicatively interfaced with the processing system 60. The SCADA control subsystem 152 is operative to perform control actions responsive to the output 69 provided by the processing system 60. The control actions may be dependent on the further operator input enabled by the processing system 60.

Various effects and advantages are attained by the processing system, method, and electric power system according to embodiments. The processing system and method provide enhanced techniques of processing alarms raised based on monitoring data. The processing system and method are operative to reduce the risk of incorrect handling of alarms, by controlling the HMI 62 to enable an operator input and a further operator input which cause additional information on a list element of an alarm list to be output and which cause a control action to be triggered or performed by the processing system.

The processing systems and methods mitigate the risk of inadequate response to an alarm situation when alarms are provided in an alarm list.

The processing system and method address a need caused by the fact that energy system operators must respond to alarms as a part of their day-to-day activities. Alarms are typically presented in an alarm list, and sometimes may be difficult to understand due to limited screen space, formatting issues, or misconfigurations. Knowing more about the alarms, especially in terms of its key performance indicators (KPIs), is helpful to provide context on the meaning and root-cause of alarms. Operators typically have limited screen space. The processing system and method allow the additional information to be output without adding another screen or without switching between different screen views. The processing system and method allows operators to interactively expand an alarm that is a part of an alarm list to show the additional information. The processing system and method are operative such that the alarm will grow in vertical height but maintain its horizontal dimensions within the alarm list to maintain situational awareness of other alarms in its local context.

The processing system and method may be operative such that, in the expanded alarm view (in which a list element is enlarged to the second size), various KPIs are graphed and illustrated that may be specific to that alarm. For example, a voltage limit violation alarm may show a recording of voltage values over time, while a breaker open alarm may simply show its history of "OPEN" and "CLOSED" states.

The processing system and method address the need for techniques that allow the additional information to be provided without loss of situational awareness in the alarm list, without adding another screen, and so as to support an operator with more alarm information during real time operation. The processing system and method address these needs and, thus, provide benefits compared to legacy systems in which outputting of alarm KPIs does not integrate with an alarm list view. In legacy techniques, an additional screen is ultimately added to provide additional information on an alarm, increasing the risk of losing sight of the alarm list. Additionally, context switching to a view in which the additional information is provided adversely affects real-time operation, as it required operators to multitask between the dynamic and changing alarm lists and a static screen of individual alarm data. The processing system and method overcome these shortcomings.

While embodiments have been described in detail with reference to the drawings, various modifications may be implemented in other embodiments. For illustration rather than limitation:
- While embodiments have been described in association with an electric power grid, the techniques disclosed herein may also be used in association with a high voltage direct current (HVDC) control system or a microgrid control system.
- While embodiments have been described in which the processing system 60 is comprised by or communicatively interfaced with a SCADA system, the processing system 60 can also be used in other use cases, e.g., to perform offline analysis of alarms.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A processing system (60) for electric power system control and/or electric power system monitoring, the processing system (60) comprising:
at least one interface (61) operative to receive monitoring data (68) during operation of the electric power system (10; 130; 140; 150); and
at least one processing circuit (70) operative to process the monitoring data (68) and to control a human machine interface, HMI (62), to
output an alarm list (80) comprising several list elements (81-86) arranged sequentially along a direction (89) on the HMI (62), each of the several list elements (81-86) providing information on at least one alarm of a plurality of alarms generated based on the monitoring data (68);
enable an operator input to select a list element (83) from the several list elements (81-86);
responsive to the operator input, enlarge the list element (83) from a first size (90) to a second size (90') on the HMI (62) to output additional information (91-97) in relation to one or several alarms for which the list element (83) provides the information, and concurrently shift one or several other list elements (82, 84) of the alarm list (80) along the direction (89) on the HMI (62) to preserve an order of the several list elements (81-86) on the HMI (62); and
control the HMI to enable a further operator input and cause a control action responsive to the further operator input, wherein the at least one processing circuit (70) is operative to control the HMI (62) to prevent the further operator input prior to the list element being enlarged to the second size (90').

2. The processing system (60) of claim 1, wherein the at least one processing circuit (70) is operative to
identify, based on the monitoring data (68), an alarm flood comprising several identical alarms that are successively raised, wherein the several list elements (81-86) comprise an alarm flood list element (81) providing information on the several identical alarms of the alarm flood; and
control the HMI (62) such that the alarm flood list element (81) comprises an indicator (98) for a number of the several identical alarms that are successively raised in the alarm flood while the list element has the first size (90) on the HMI (62).

3. The processing system (60) of claim 2, wherein the at least one processing circuit (70) is operative to control the HMI (62) such that the indicator (98) comprises a numerical indicator (98) quantifying the number of the several identical alarms that are successively raised in the alarm flood.

4. The processing system (60) of any one of the preceding claims, wherein the at least one processing system (60) is operative to control the HMI (62) to enlarge the list element from the first size (90) to the second size (90') along the direction while maintaining a transverse size of the list element in a transverse direction perpendicular to the direction unchanged.

5. The processing system (60) of any one of the preceding claims, wherein the at least one processing circuit (70) is operative to
control the HMI (62) to enable the further operator input while the list element has the second size (90') on the HMI (62); and
cause the control action to be performed responsive to the further operator input to address an alarm-triggering situation in the electric power system (10; 130; 140; 150) giving rise to the at least one alarm for which the list element (83) provides information.

6. The processing system (60) of claim 5, wherein the control action comprises an action affecting primary system equipment (21-26) of the electric power system (10; 130; 140; 150) and/or secondary system equipment (41-46) of the electric power system (10; 130; 140; 150), the action being a corrective action or a mitigating action.

7. The processing system (60) of claim 5 or claim 6, wherein the control action comprises any one or several of the following control actions related to an alarm of the alarm list (80):
delegating the alarm;
marking the alarm;
acknowledging the alarm;
searching for past occurrences, past resolutions, and/or documentation about the alarm;
navigating to a geographic or technical point of origin of the alarm;
initiating a communication link;
initiating a maintenance ticket.

8. The processing system (60) of any one of the preceding claims, wherein the at least one processing circuit (70) is operative to
determine an alarm severity for the one or several alarms for which the list element provides information; and
responsive to a verification that the alarm severity fulfils a severity flag criterion, control the HMI (62) to output a severity flag (99) while the list element is enlarged to the second size (90').

9. The processing system (60) of any one of the preceding claims, wherein the at least one processing circuit (70) is operative to control the HMI (62) to shift the one or several other list elements (82, 84) of the alarm list (80) such that the list element (83) enlarged to the second size (90') is arranged adjacent the one or several other list elements (82, 84) in a non-overlapping manner.

10. The processing system (60) of any one of the preceding claims, wherein the at least one processing circuit (70) is operative to control the HMI (62) such that the additional information (91-97) is determined from the monitoring data (68) in a manner that is dependent on an alarm type of the at least one alarm for which the list element provides the information.

11. The processing system (60) of any one of the preceding claims, wherein the at least one processing circuit (70) is operative to determine, based on the monitoring data (68), a time horizon related to an alarm time with which the list element (81) is associated, and to control the HMI (62) such that the additional information (91-97) comprises one, several, or all of the following:
a graph (91) representing an electric characteristic of the electric power system (10; 130; 140; 150) as a function of time over the time horizon;
an event history (95) of electric power system events as a function of time over the time horizon;
an additional list of similar alarms triggered over the time horizon.

12. The processing system (60) of any one of the preceding claims, wherein the at least one processing circuit (70) is operative to control the HMI (62) such that the additional information (91-97) comprises one, several, or all of the following: a line graph (91); a bar chart; a numerical value; a series of numerical values; a meter (97); a list (95, 96); a textual description; an icon; an icon sequence.

13. An electric power system (10; 130; 140; 150), comprising:
a primary system (10) comprising primary system equipment (21-26; 132);
a secondary system (40) operative to perform control and/or monitoring functions for the primary system (10); and
the processing system (60) of any one of the preceding claims operative to communicatively interface with the secondary system (40) to obtain the monitoring data (68).

14. A processing method for an electric power system (10; 130; 140; 150), the processing method comprising:
receiving, by a processing system (60), monitoring data (68) during operation of the electric power system (10; 130; 140; 150);
processing, by at least one processing circuit (70) of the processing system (60), the monitoring data (68) and controlling, by the at least one processing circuit (70), a human machine interface, HMI (62), to
output an alarm list (80) comprising several list elements (81-86) arranged sequentially along a direction (89) on the HMI (62), each of the several list elements (81-86) providing information on at least one alarm of a plurality of alarms generated based on the monitoring data (68);
enable an operator input to select a list element (83) from the several list elements (81-86);
responsive to the operator input, enlarge the list element (83) from a first size (90) to a second size (90') on the HMI (62) to output additional information (91-97) in relation to one or several alarms for which the list element (83) provides the information, and concurrently shift one or several other list elements (82, 84) of the alarm list (80) along the direction on the HMI (62) to preserve an order of the several list elements (81-86) on the HMI (62); and
control the HMI to enable a further operator input and cause a control action responsive to the further operator input, wherein the at least one processing circuit (70) is operative to control the HMI (62) to prevent the further operator input prior to the list element being enlarged to the second size (90').

15. Machine-readable instruction code which, upon execution by at least one programmable processing circuit (70), causes the at least one programmable processing circuit (70) to perform the method of claim 14.
